# EUROPÄISCHE PATENTSCHRIFT

(11) **EP 2 700 296 B1**
(45) Veröffentlichungstag und Bekanntmachung des Hinweises auf die Patenterteilung: **13.05.2015**
(21) Anmeldenummer: 12405087.3
(22) Anmeldetag: 23.08.2012
(51) Int. Cl.: A01D 89/00, B62D 51/06

(54) **Vorrichtung zur Aufnahme und zum Transport von gemähtem, auf dem Boden liegenden Halmgut**
Device for picking up and transporting mown agricultural crops lying on the ground surface
Dispositif destiné au ramassage et au transport de matières agricoles en brins, tondues et se trouvant sur la surface du sol

(43) Veröffentlichungstag der Anmeldung: 26.02.2014
(73) Patentinhaber: Rapid Technic AG, CH-8956 Killwangen (CH)
(72) Erfinder: Häfeli, Christian, 6332 Hagendorn (CH)
(74) Vertreter: Fenner, Werner

(56) Entgegenhaltungen:
- EP-A1- 2 449 874
- EP-A2- 0 236 106
- WO-A2-2009/140687
- US-A- 1 507 317
- US-A- 1 896 626
- US-A- 2 754 531
- US-A- 3 186 019
- US-A- 3 747 313

## Beschreibung

Die Erfindung betrifft eine Vorrichtung zur Aufnahme und zum Transport von auf dem Boden liegendem, gemähtem landwirtschaftlichem Halmgutes mittels einer an der Vorderseite eines wenigstens einachsigen, manuell geführten Traktors anbaubaren, rotierend angetriebenen und über eine Arbeitsbreite quer zur Fortbewegungsrichtung sich erstreckenden Achse, mittels Rollen oder Gleitelementen auf dem Boden abgestützte Fördertrommel, die am Umfang an einer angetriebenen Welle verteilt abstehende Förderwerkzeuge aufweist und in Bodennähe in Fortbewegungsrichtung angetrieben ist, wobei die mit einem Fahrgestell des wenigstens einachsigen Traktors verbundene, in seitlichen Auslegern gelagerte und mit einer Antriebswelle des Traktors verbundene Fördertrommel mehrere entlang der Achse angeordnete und an der Welle verteilt befestigte, aus von der Welle abstehenden Borsten gebildete Bürstenleisten aufweist, wobei zwischen den Borsten einer Bürstenleiste senkrecht zur Achse stehende, die Welle oberschlächtig umgebende Abstreifelemente vorgesehen sind.
Diese im Fachgebiet auch als Pic-up bezeichnete Vorrichtung wird/ist bei landwirtschaftlichen Maschinen und Einrichtungen angebaut. Beispielsweise an der Vorderseite gezogener Ernte- und/oder Ladewagen sowie bei Häckselgeräten oder an der Rückseite von selbstfahrenden Transportfahrzeugen mit aufgebautem Ladegerät. Solche Vorrichtungen eignen sich auch bei manuell geführten Einachstraktoren zur Bergung von gemähtem, auf dem Boden liegenden Halmgut resp. Heu, das nach der Aufnahme entgegen der Fortbewegungsrichtung der Arbeitsmaschine zur seitlichen Schwadbildung resp. Ablage weitertransportiert wird. Diese Vorrichtungen bestehen im Wesentlichen aus einer zentralen Hauptwelle und vier bis fünf um die Hauptwelle angeordnete Satellitenwellen, an denen Förderzinken in einer Reihe über die Arbeitsbreite befestigt sind und die in/an seitlichen Kurvenbahnen zur Steuerung einer Schwenkbewegung der Förderzinken gelagert und geführt sind. Zwischen den Förderzinken sind quer zur Fortbewegungsrichtung sogenannte Zinkenbänder befestigt, die dafür sorgen, dass das Halmgut nicht durch die Fördertrommel auf den Boden oder in die Fördertrommel zurückfällt.
Dabei kommt es darauf an, dass die frontseitig angebaute Vorrichtung eine erforderliche Robustheit aufweist.

Durch die EP 2'449'874 A1 ist eine an der Vorderseite eines Einachstraktors anbaubare Fördereinrichtung bekanntgeworden, die eine liegendes geschnittenes Halmgut mittels rotierenden, gesteuerten Förderzinken von der Bodenoberfläche aufnehmende Aufnahmevorrichtung aufweist.

Die US 2'636'335 beschreibt eine an der Frontseite eines Traktors zur Aufnahme von auf dem Boden liegenden, gemähtem Halmgut angebaute Einrichtung mit einer Pic-up- Trommel mit gesteuerten Förderzinken als Förderwerkzeuge. Die Pic-up-Trommel dreht sich dabei in Bodennähe in Fortbewegungsrichtung der Arbeitsmaschine, die zwischen den Förderzinken der Pic-up-Trommel eine zum Boden gerichtete, aus gekrümmten Leitelementen gebildete Führungsvorrichtung aufweist, auf welcher das Halmgut gefördert und die Zinken nach dem Transport des Halmgutes von diesem durch eine Abstreifbewegung befreit werden.
Derartige Einrichtungen sind aus Baustahl hergestellt und weisen ein relativ hohes Gewicht auf, sodass eine manuelle Führung und Bedienung der Arbeitsmaschine nur mit hohem Kraftaufwand möglich ist, insbesondere in Hanglagen, wo die Maschine mehrfach gewendet wird.

Die vorveröffentlichte WO 20091140687 A2 betrifft eine begleitete zweiachsige Arbeitsmaschine zum frontseitigen Anbau von Arbeitsgeräten wie Räumschilder, Kehrbürsten, Rotorwalzen, Rasenräumer und dgl. Geräte.

Es ist deshalb Aufgabe der Erfindung, die Bergung des landwirtschaftlichen Halmgutes, insbesondere mit manuell geführten Einachstraktoren unter Einhaltung der erforderlichen robusten Bauweise und einer leichteren Manövrierfähigkeit der Vorrichtung mit geringerer Kraftanstrengung und in kürzerer Zeit als bisher vornehmen zu können.

Erfindungsgemäss wird diese Aufgabe dadurch gelöst, dass die Bürstenleisten nach Abscnitten einer Wendel resp. sich in einem Bogen gekrümmt entlang der Achse an der Welle abstehend befestigt sind und mit den freistehenden Borstenenden der Fördertrommel zur Achse einen zylindrischen Rotationskörper bilden, sodass die Borsten der Bürstenleisten entlang der Welle das Halmgut versetzt erfassen können.

Vorzugsweise sind die Bürstenleisten auf einer in oder entgegen der Drehrichtung der Fördertrommel regelmässig (konkav oder konvex) gebogenen Linie entlang der Achse an der Welle befestigt, sodass die inneren Borsten einer Bürstenleiste vor den äusseren oder umgekehrt mit dem Halmgut in Kontakt kommen. Durch das frühere Erfassen kann das in verflochtenem Zustand auf dem Boden liegende Halmgut nach innen oder aussen geführt werden.

Die Aufnahmewirkung der Bürstenleisten kann dadurch optimiert werden, wenn die Borsten aus mehreren gebündelten Borsten ausgebildet sind, beispielsweise aus mehreren dünnen Borsten.

Vorzugsweise sind die gebündelten Borsten im Abstand zur Welle durch eine ringförmige Einfassung zusammengebunden, um ihre Steifigkeit zu verbessern und einen Wickeleffekt des Halmgutes zu vermeiden.

Die Borsten resp. die Bürstenleisten können bei unterschiedlichem Futtervorkommen nach einer der Drehrichtung der Fördertrommel rückwärtigen resp. entgegengesetzten Position ausgerichtet sein, wodurch eine schonende Aufnahmewirkung auf das Halmgut entsteht.

Hierzu kann die Ausrichtung der Bürstenleisten eingestellt resp. verstellt werden.

Die Anordnung der Borsten einer Bürstenleiste ist vorzugsweise in Abständen vorgesehen, die einer Gewichtsminderung der Fördertrommel zuträglich ist.

Zweckmässig sind im Abstand zum Boden zwischen den Borsten einer Bürstenleiste senkrecht zur Achse stehende, die Welle oberschlächtig umgebende Abstreifelemente vorgesehen, unter resp. innerhalb dieser die Borsten der Bürstenleisten während dem Drehen der Fördertrommel förderunwirksam zurückgeführt werden.

Vorteilhaft sind im Abstand zum Boden resp. der Bodenoberfläche zwischen den Borsten einer Bürstenleiste senkrecht zur Achse der Welle stehende, die Welle zumindest teilweise oberschlächtig umgebende Abstreifelemente vorgesehen, aus denen die Borsten im Aufnahme- und anschliessenden Förderbereich an der Fördertrommel förderwirksam herausragen und im oberschlächtigen Förderbereich der Fördertrommel das Halmgut von den Borsten abstreifend ausser Wirkung zurückgeführt werden. Die Abstreifelemente sind etwa sichelförmig ausgestaltet und an einem quer zur Fortbewegungsrichtung der Vorrichtung verlaufenden Tragbalken, eine Rechenvorrichtung bildend befestigt resp. austauschbar befestigt.

Zweckmässig sind die langen resp. länglichen Borsten einer Bürstenleiste aus einem nichtmetallischen, elastischen Werkstoff gebildet, beispielsweise Kunststoff oder einem Werkstoff mit ähnlichen Eigenschaften, sodass sie sich den Bodenunebenheiten und den hochstehenden Grasnarben anpassen können.

Es würden sich Borsten aus dünnen Federstahlblättern oder Faserverbundwerkstoffen für Bürstenleisten ebenfalls eignen.

Es ist wichtig, dass die Fördertrommel gegenüber dem Boden in der Höhe einstell - und -verstellbar ausgebildet resp. an die Schnitthöhe oder die vorkommende gemähte Halmgutmenge anpassbar ist.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung der erfindungsgemässen Vorrichtung,
- Fig. 2: eine auszugsweise schematische Darstellung einer Ausführungsform der Fördertrommel der Vorrichtung,
- Fig. 3: eine Seitenansicht der in Fig. 2 dargestellten Fördertrommel,
- Fig. 4: eine schematische Darstellung einer alternativen Ausführungsform der Fördertrommel der Vorrichtung,
- Fig. 5: eine Seitenansicht der in Fig. 4 veranschaulichten Fördertrommel,
- Fig. 6: eine schematische Darstellung einer weiteren AusführungsForm der Fördertrommel der Vorrichtung und
- Fig. 7: eine Seitenansicht der in Fig. 6 veranschaulichten Fördertrommel.

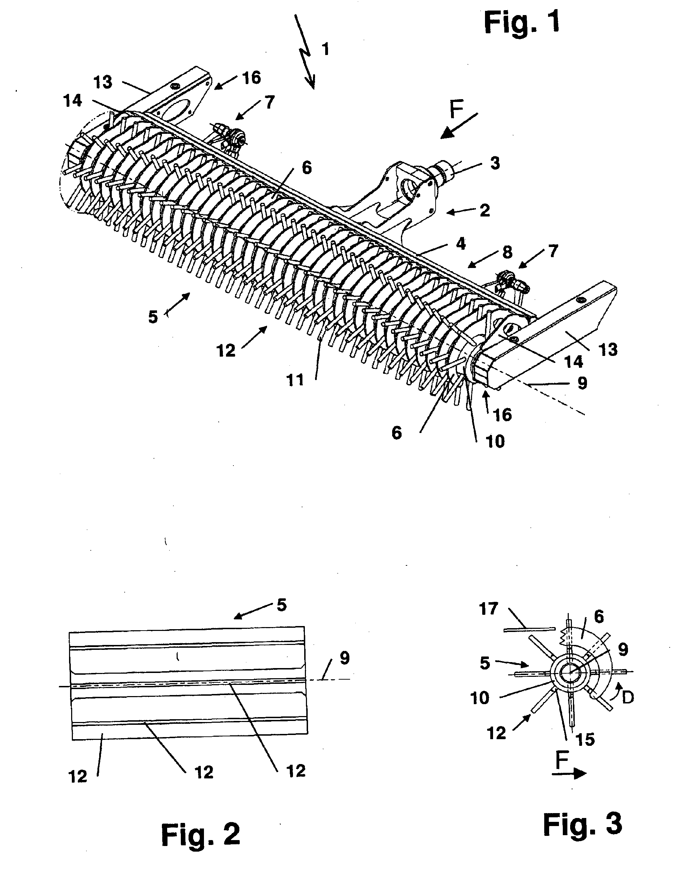

Fig. 1 zeigt eine einem manuell lenkbaren, selbstfahrenden Einachstraktor (nicht ersichtlich) in Fortbewegungsrichtung F vorgeschaltete Vorrichtung 1 zur Aufnahme und zum Transport von auf dem Boden liegenden, gemähten landwirtschaftlichen Halmgutes, beispielsweise angewelktes Gras, Heu oder Emd. Die Vorrichtung 1 weist eine Anbauvorrichtung 2 auf, mit dem Traktor verbunden wird resp. die an der Vorderseite des Traktors mittels einer Muffe 3 in ein Getriebegehäuse (nicht dargestellt) einsteckbar und an diesem lösbar befestigt ist. Die Muffe umgibt eine mit dem Getriebe des Traktors verbundene Antriebs- resp. Zapfwelle, mit der die Vorrichtung 1 antriebsverbunden ist.
An der Anbauvorriohtung 2 ist in Fortbewegungsrichtung F gegenüberliegend von der Muffe 3 ein Tragbalken 4 mit der Anbauvorrichtung 2 fest verbunden, der sich quer zur Fortbewegungsrichtung F erstreckt und an dem eine Fördertrommel 5 angeordnet ist. An den Förderbereich der Fördertrommel 5 anschliessend ist ein über die Arbeitsbreite der Fördertrommel 5 sich erstreckendes Leitelement (nicht dargestellt) angeordnet, auf dem das zuvor aufgenommene Halmgut gegen die Fortbewegungsrichtung F der Vorrichtung resp. des Traktors durch das kontinuierlich zugeführte resp. nachfolgende Halmgut zur Weiterverarbeitung weitergefördert wird. Abstreifelemente 6, deren Ausführungsform und Funktion nachträglich beschrieben ist, sind mit dem Leitelement stufenlos resp. förderwirksam verbunden.
Die Fördertrommel 5 ist auf Rollen oder Gleitelementen (nicht erkennbar) abgestützt, wozu eine ein- und verstellbare Abstützvorrichtung 7 mit einem den Tragbalken 7 aufweisenden Traggestell 8 der Vorrichtung 1 verbunden ist.
Die Fördertrommel 5 weist eine um eine etwa parallel zur Bodenoberfläche resp. zur Hangebene angeordnete Achse 9 angetriebene Welle 10 auf, an deren Umfang entlang der Achse 9 aus Borsten 11 gebildete Bürstenleisten befestigt sind, wobei die eine Bürstenleiste 12 bildenden Borsten 11 direkt an der Welle 10 befestigt oder mittelbar über einen an der Welle 10 befestigten leistenartigen Borstenhalter mit der Welle 10 verbunden sind.
Die Welle wiederum ist beidenends in mit dem Traggestell 8 verbundenen Lagern angeordnet und mit der Antriebswelle des Traktors antriebsverbunden. Zu diesem Zweck sieht die dargestellte Vorrichtung ein an der Welle 10 befestigtes Umlenkrad eines Riemen- oder Kettengetriebes vor, das antriebsseitig ein weiteres, mit der Antriebswelle resp. der Zapfwelle des Traktors verbundenes, an einer Verbindungswelle befestigtes Antriebsrad aufweist. Träger des Riemen- oder Kettengetriebes ist ein mit dem Traggestell 8 verbundener Ausleger 16, der zum Gewichtsausgleich an der Längsmittelachse auch an dem gegenüberliegenden Ende der Vorrichtung 1 vorgesehen ist.
An dem dem Antriebsrad gegenüberliegenden Ende der Verbindungswelle ist ein Kegelrad eines Winkelgetriebes befestigt, das mit einem mit der Antriebswelle des Traktors verbundenen Kegelrades kämmt.
Zum Schutz des Riemenvorgeleges ist an dem Ausleger 16 eine haubenartige Schutzvorrichtung 13 abnehmbar befestigt.
Fig. 1 gibt eine Fördertrommel 5 zu erkennen, bei der die Borsten 11 an der Welle 10 eingesteckt oder festgeschraubt resp. verankert sind, derart, dass sie in einem spitzen Winkel von'einer Radialen zur Achse 9 abweichend gegen die Drehrichtung D ausgerichtet sind.
Die aus den Borsten 11 gebildeten Bürstenleisten 12 sind in einem Bogen gekrümmt entlang der Achse 9 mit der Welle 10 verbunden, sodass die inneren Borstenabschnitte an der Fördertrommel 5 das liegende Halmgut vor den äusseren erfassen. Mit dem früher erfassten inneren Halmgut kann der verflochtene äussere Bereich von aussen nach innen mitgezogen werden, sodass eine saubere Aufsammelarbeit entstehen kann.
Alternativ ist es möglich, dass bei einem Bogen gegen die Drehrichtung D der Fördertrommel 5 (konkave Ausführung), das liegende Halmgut zuerst durch die äusseren Abschnitte der Fördertrommel 5 erfasst wird.
Zwischen den Borsten 11, die einen geringeren Abstand als die Stahlzinken der bekannten Förder- oder Aufnahmetrommeln haben, ist jeweils das oben schon erwähnte Abstreifelement 6 angeordnet, das die Welle 10 im oberschlächtigen Förderbereich teilweise umgibt und eine etwa sichelartige Form aufweist. Die Abstreifelemente 6 sind vorliegend an dem Tragbalken 4 des Traggestells 8 der Vorrichtung 1 vorzugsweise austauschbar befestigt und werden vorteilhaft gemeinsam über der Welle 10 an der Fördertrommel 5 angeordnet.
Deutlich erkennbar ist in Fig. 1, dass die Borsten 11 im unteren Aufnahmebereich eine grössere aus den Abstreifelementen 6 vorstehende Arbeitslänge aufweisen als im oberen Arbeitsbereich, wo sie allmählich aus dem Förderbereich unter die Abstreifelemente 6 tauchen. An den Aussenseiten der Fördertrommel 5 ist jeweils ein Führungselement 14 mit dem Traggestell 8 verbunden, das den Zutritt des Halmgutes zum Riemengetriebe und zum Umlenkrad verhindert.

Die Fig. 2 bis 7 veranschaulichen unterschiedliche Anordnungsweisen der in Reihen entlang der Achse 9 an der in Pfeilrichtung D drehenden Welle 10. Die Welle 10 weist vorzugsweise einen zylindrischen Querschnitt und als Werkstoff, Kunststoff, ein Kunststoff/Gummigemisch oder Stahl auf, könnte jedoch auch aus einem Kunststoff- oder leichten Stahlprofil gebildet sein, und an den Enden ein Drehlager aufweisen.

Die Fig. 2 und 3 zeigen von der Achse 9 radial abstehende Borstenreihen, die praktisch ununterbrochen nebeneinander stehend entlang der Achse 9 resp. der Welle 10 angeordnet sind. Die oberen Enden der Abstreifelemente 6 bilden eine Förderebene an die ein Leitelement 17 anschliesst.

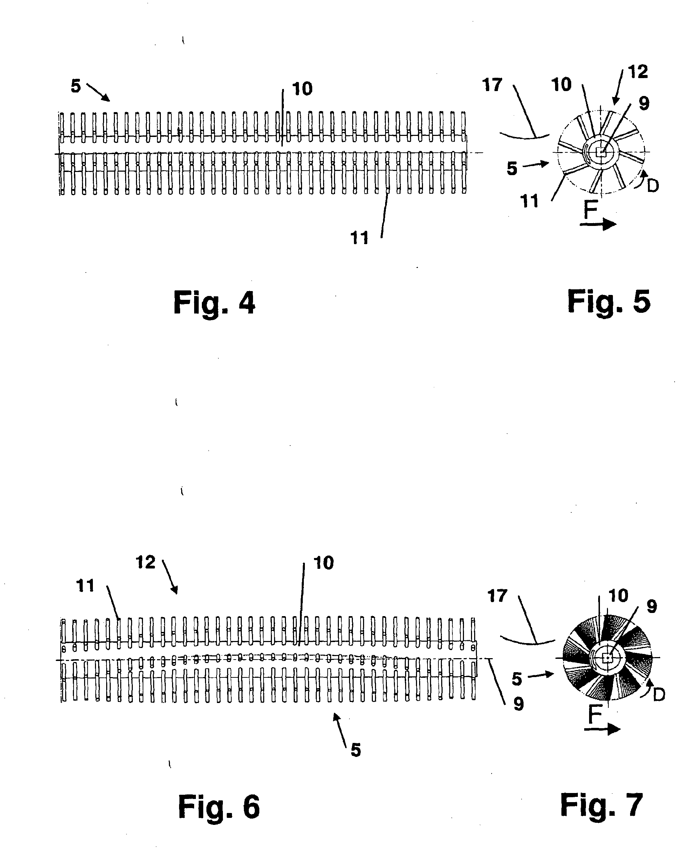

Die Fig. 4 und 5 stellen eine alternative Ausführungsform der Fördertrommel 5 dar, bei der die Bürstenleisten 12 resp. die entlang der Achse 9 nebeneinandergereihten Borsten 11, aus dünnen Borsten zu einem Borstenelement gebündelt sind, wobei die Borstenelemente in Abständen nebeneinander entlang der Achse 9 resp. an der Welle 10 befestigt sind, wie schon zu den Fig. 1 und 2 beschrieben.

Fig. 5 zeigt, dass bei diesem Förderrotor resp. dieser Fördertrommel 5 die Borsten resp. gebündelten Borsten einer Bürstenleiste 12 entgegen der Drehrichtung D von der Radialen abweichend gegen die Drehrichtung D abgewinkelt ausgerichtet sind.

Die Fig. 6 und 7 zeigen eine Fördertrommel 5, bei der die Borsten 11 resp. die Bürstenleisten 12 in Form von Abschnitten einer oder mehrerer Wendeln entlang der Achse 9 an der Welle 10 befestigt sind.
Dabei können die Wendelabschnitte wahlweise so angeordnet sein, dass das Halmgut von einem Wendelabschnitt zuerst an den seitlichen Enden der Fördertrommel 5 erfasst und nach innen gefördert wird, oder so, dass das Halmgut zuerst vom inneren Bereich der Fördertrommel 5 erfasst wird.

Die Bürstenleisten 12 bilden an der Achse 9 einen liegenden zylindrischen Rotationskörper.

Die Borsten 11 einer Bürstenleiste 12 sind aus einem nichtmetallischen, elastischen Werkstoff ausgebildet, sodass sie sich beim Aufnehmen von Halmgut an die Bodenoberfläche anpassen und beim Fördern des Halmgutes in die Ruhestellung zurückschwenken können.
Die Fördertrommel 5 ist gegenüber dem Boden, insbesondere hinsichtlich Höhenabstand einstell- und verstellbar ausgebildet.

## Patentansprüche

1. Vorrichtung (1) zur Aufnahme und zum Transport von auf dem Boden liegenden, gemähten landwirtschaftlichen Halmgutes mittels einer an der Vorderseite eines wenigstens einachsigen, manuell geführten Traktors anbaubaren, rotierend angetriebenen und über eine Arbeitsbreite quer zur Fortbewegungsrichtung sich erstreckenden Achse (9), mittels Rollen oder Gleitelementen auf dem Boden abgestützte Fördertrommel (5), die am Umfang an einer angetriebenen Welle (10) verteilt abstehende Förderwerkzeuge aufweist und in Bodennähe in Fortbewegungsrichtung (F) angetrieben ist, wobei die mit einem Fahrgestell des wenigstens einachsigen Traktors verbundene, in seitlichen Auslegern (16) gelagerte und mit einer Antriebswelle des Traktors antriebsverbundene Fördertrommel (5) mehrere entlang der Achse (9) angeordnete und an der Welle (10) verteilt befestigte, aus von der Welle (10) abstehenden Borsten (11) gebildete Bürstenleisten (12) aufweist, wobei zwischen den Borsten (11) einer Bürstenleiste (12) senkrecht zur Achse (9) stehende, die Welle (10) oberschlächtig umgebende Abstreifelemente (6) vorgesehen sind, **dadurch gekennzeichnet, dass** die Bürstenleisten (12) nach Abschnitten einer Wendel resp. sich in einem Bogen gekrümmt entlang der Achse (9) an der Welle (10) abstehend befestigt sind und mit den freistehenden Borstenenden der Fördertrommel (5) zur Achse (9) einen zylindrischen Rotationskörper bilden.

2. Vorrichtung nach Anspruch 1, **dadurch gekennzeichnet, dass** die Bürstenleisten (12) jeweils auf einer in oder entgegen der Drehrichtung (D) der Fördertrommel (5) gebogenen Linie entlang der Achse (9) an der Welle (10) abstehend befestigt sind.

3. Vorrichtung nach Anspruch 1 oder 2, **dadurch gekennzeichnet, dass** die Borsten (11) der Bürstenleisten (12) als gebündelte Borsten ausgebildet sind.

4. Vorrichtung nach Anspruch 3, **dadurch gekennzeichnet, dass** die gebündelten Borsten (11) im Abstand zur Welle (10) durch eine ringförmige Einfassung zusammengebunden sind.

5. Vorrichtung nach einem der Ansprüche 1 bis 4, **dadurch gekennzeichnet, dass** die Borsten (11) resp. die Bürstenleisten (12) nach einer von der Drehrichtung (D) der Fördertrommel 5 rückwärtig abgewinkelten Lage resp. gegen die Drehrichtung abgewinkelt ausgerichtet sind.

6. Vorrichtung nach einem der Ansprüche 1 bis **5, dadurch gekennzeichnet, dass** die Borsten (11) einer Bürstenleiste (12) in Abständen nebeneinander angeordnet sind.

7. Vorrichtung nach einem der Ansprüche 1 bis 6, **dadurch gekennzeichnet, dass** die Abstreifelemente (6) sichelförmig ausgebildet und an einem quer zur Fortbewegungsrichtung angeordneten Tragbalken (4) eines Traggestells (8) befestigt sind.

8. Vorrichtung nach einem der Ansprüche 1 bis 7, **dadurch gekennzeichnet, dass** zumindest die Borsten (11) einer Bürstenleiste (12) aus einem nichtmetallischen, elastischen Werkstoff ausgebildet sind.

9. Vorrichtung nach einem der Ansprüche 1 bis 8, **dadurch gekennzeichnet, dass** die Borsten (11) der Bürstenleisten (12) aus einem metallischen und elastischen Werkstoff ausgebildet sind.

10. Vorrichtung nach einem der Ansprüche 1 bis 9, **dadurch gekennzeichnet, dass** die Fördertrommel (5) gegenüber dem Boden höheneinstell und -verstellbar ausgebildet ist.

## Claims

1. Device (1) for picking up and transporting mown agricultural crops lying on the ground by means of a conveying drum (5) that can be mounted at the front of an at least single-axle, walk-behind tractor, driven in rotation about an axis (9) extending transversely to the direction of movement over a working width and supported on the ground by means of rollers or sliding elements, said conveying drum (5) comprising projecting conveying tools distributed around the circumference of a driven shaft (10) and being driven in the direction of movement (F) in the vicinity of the ground, wherein the conveying drum (5) connected to a chassis of the at least single-axle tractor, supported in side arms (16) and operatively connected to a drive shaft of the tractor comprises a plurality of brush strips (12) arranged along the axis (9), distributed along the shaft (10) and secured thereto and formed of bristles (11) projecting from the shaft (10) and wherein stripper elements (6) extending perpendicularly to the axis (9) and surrounding the shaft (10) in an overshot manner are provided between the bristles (11) of a brush strip (12), **characterised in that** the brush strips (12) are secured to the shaft (10) in such a manner that they project therefrom in portions of a spiral or curved in an arc along the axis (9) and form a cylindrical body of revolution relative to the axis (9) together with the exposed bristle ends of the conveying drum (5).

2. Device according to claim 1, **characterised in that** the brush strips (12) are each secured to the shaft (10) in such a manner that they project therefrom in a line along the axis (9) curved in or against the direction of rotation (D) of the conveying drum (5).

3. Device according to claim 1 or claim 2, **characterised in that** the bristles (11) of the brush strips (12) are designed as bunched bristles.

4. Device according to claim 3, **characterised in that** the bunched bristles (11) are bundled together at a distance from the shaft (10) by an annular binding.

5. Device according to one of claims 1 to 4, **characterised in that** the bristles (11) or the brush strips (12) are oriented in such a manner that they are angled backwards relative to the direction of rotation (D) of the conveying drum (5) or angled against the direction of rotation.

6. Device according to one of claims 1 to 5, **characterised in that** the bristles (11) of a brush strip (12) are arranged at intervals one alongside the other.

7. Device according to one of claims 1 to 6, **characterised in that** the stripper elements (6) are sickle-shaped and are secured to a beam (4) of a supporting frame (8) arranged transversely to the direction of movement.

8. Device according to one of claims 1 to 7, **characterised in that** at least the bristles (11) of a brush strip (12) are made of a non-metallic, flexible material.

9. Device according to one of claims 1 to 8, **characterised in that** the bristles (11) of the brush strips (12) are made of a metallic and flexible material.

10. Device according to one of claims 1 to 9, **characterised in that** the conveying drum (5) is vertically adjustable and displaceable relative to the ground.

## Revendications

1. Dispositif (1) destiné au ramassage et au transport de matières agricoles en brins, fauchées et se trouvant sur le sol au moyen d'un tambour de transport (5) pouvant être monté sur le côté avant d'un tracteur guidé manuellement à au moins un essieu, entraîné en rotation et supporté sur le sol au moyen de rouleaux ou d'éléments de glissement autour d'un axe (9) s'étendant sur une largeur de travail transversalement au sens de déplacement vers l'avant, lequel tambour de transport comprend des outils de transport saillant de manière répartie sur la périphérie sur un arbre entraîné (10) et est entraîné à proximité du sol dans le sens de déplacement vers l'avant (F), le tambour de transport (5) relié à un châssis du tracteur à au moins un essieu, monté dans des bras en porte-à-faux latéraux (16) et relié par entraînement à un arbre d'entraînement du tracteur comprenant plusieurs bandes de brossage (12) disposées le long de l'axe (9) et fixées de manière répartie à l'arbre (10) et formées à partir de brosses (11) faisant saillie à partir de l'arbre (10), des éléments de raclage (6) entourant l'arbre (10) par le dessus, perpendiculaires à l'axe (9), étant prévus entre les brosses (11) d'une bande de brossage (12), **caractérisé en ce que** les bandes de brossage (12) sont fixées de manière saillante sur l'arbre (10) selon des sections d'une hélice, respectivement de manière courbée en un arc le long de l'axe (9), et forment un corps de rotation cylindrique par rapport à l'axe (9) par les extrémités de brosse autoporteuses du tambour de transport (5).

2. Dispositif selon la revendication 1, **caractérisé en ce que** les bandes de brossage (12) sont fixées de manière saillante sur l'arbre (10) le long de l'axe (9) respectivement sur une ligne courbée dans le sens de rotation (D) du tambour de transport (5) ou en sens inverse à celui-ci.

3. Dispositif selon la revendication 1 ou 2, **caractérisé en ce que** les brosses (11) des bandes de brossage (12) sont réalisées sous forme de brosses en faisceaux.

4. Dispositif selon la revendication 3, **caractérisé en ce que** les brosses en faisceaux (11) sont attachées ensemble à distance de l'arbre (10) au moyen d'une bordure annulaire.

5. Dispositif selon l'une quelconque des revendications 1 à 4, **caractérisé en ce que** les brosses (11), respectivement les bandes de brossage (12), sont orientées vers une position coudée vers l'arrière à partir du sens de rotation (D) du tambour de transport (5), respectivement de manière coudée en sens inverse au sens de rotation.

6. Dispositif selon l'une quelconque des revendications 1 à 5, **caractérisé en ce que** les brosses (11) d'une bande de brossage (12) sont disposées à des distances les unes à côté des autres.

7. Dispositif selon l'une quelconque des revendications 1 à 6, **caractérisé en ce que** les éléments de raclage (6) sont réalisés en forme de croissant et sont fixés à une barre de support (4) d'un bâti de support (8) disposée transversalement au sens de déplacement vers l'avant.

8. Dispositif selon l'une quelconque des revendications 1 à 7, **caractérisé en ce qu'**au moins les brosses (11) d'une bande de brossage (12) sont réalisées à partir d'un matériau élastique non métallique.

9. Dispositif selon l'une quelconque des revendications 1 à 8, **caractérisé en ce que** les brosses (11) des bandes de brossage (12) sont réalisées à partir d'un matériau métallique et élastique.

10. Dispositif selon l'une quelconque des revendications 1 à 9, **caractérisé en ce que** le tambour de transport (5) est réalisé de manière réglable et déplaçable en hauteur par rapport au sol.
